# FASCICULE DE BREVET EUROPEEN

(11) **EP 3 431 916 B1**
(45) Date de publication et mention de la délivrance du brevet: **15.04.2020**
(21) Numéro de dépôt: 18183767.5
(22) Date de dépôt: 16.07.2018
(51) Int. Cl.: F41H 7/04, F41G 1/00, F41H 13/00, F41A 23/20, F41A 23/34, B60P 1/54

(54) **VÉHICULE MILITAIRE**
MILITÄRFAHRZEUG
MILITARY VEHICLE

(30) Priorité: 19.07.2017 FR 1700768
(43) Date de publication de la demande: 23.01.2019
(73) Titulaire: NEXTER Systems, 42328 Roanne Cedex (FR)
(72) Inventeur: BERTRAND, Ludovic, 18023 Bourges (FR)
(74) Mandataire: Cabinet Chaillot

(56) Documents cités:
- EP-A1- 1 717 540
- EP-A1- 2 071 268
- EP-A2- 0 753 479
- EP-A2- 2 746 715
- WO-A2-2004/097325
- JP-A- 2003 056 997

## Description

Le domaine technique de l'invention est celui des véhicules militaires comportant une charge utile déployable au-dessus du véhicule et pouvant être escamotée dans un compartiment du véhicule. Un tel véhicule est divulgué dans le document EP 2 071 268 A1.

Il est décrit par le brevet US7013790 un véhicule militaire comportant un compartiment abritant une charge utile, en l'espèce une arme. Cette arme est déployable depuis l'intérieur du compartiment jusqu'à une position sortie au-dessus du véhicule afin de pouvoir tirer après le retrait d'un rideau motorisé à lames qui ferme le compartiment.

Un tel dispositif est complexe et peu fiable car il requiert une motorisation ainsi que tous les moyens de commande associés.

L'invention vise à résoudre ce problème de complexité et de fiabilité en proposant une solution simple et robuste. L'invention permet en outre de résoudre un problème de rapidité d'ouverture, puisque l'état de l'art nécessite que le volet soit complètement ouvert avant de pouvoir déployer l'arme.

Ainsi, l'invention porte sur un véhicule militaire comportant un bras articulé relativement au véhicule au moyen d'une charnière située à une première extrémité du bras, bras comportant une charge utile à sa seconde extrémité, charge contenue dans un compartiment solidaire du véhicule lorsque le bras est dans une première position dite position rentrée, bras déployable vers une seconde position dite position sortie dans laquelle la charge est sortie du compartiment, véhicule caractérisé en ce que le bras comporte un capot monté pivotant par rapport au bras à l'aide d'une liaison pivot entre une position ouverte, obtenue par l'action d'un moyen élastique lorsque le bras est en position sortie, capot fermant le compartiment lorsque le bras est en position rentrée, le pivotement de fermeture du capot étant obtenu contre l'action du moyen élastique par interférence d'un levier solidaire du capot avec une partie du véhicule ou du compartiment.

Avantageusement, le levier est positionné de façon à interférer avec la partie de véhicule ou de compartiment en un point situé entre la charnière du bras et la liaison pivot.

Avantageusement, la charge utile comporte un moyen d'observation.

Avantageusement, le capot obture totalement le compartiment lorsque le bras est en position rentrée.

Avantageusement, le levier comporte un profil arrondi permettant un pivotement progressif du capot.

L'invention sera mieux comprise à la lecture de la description suivante, description faite en regard des dessins annexés, dessins dans lesquels :
La figure 1 représente un véhicule selon l'invention avec un bras en position rentrée.
La figure 2 représente un véhicule selon l'invention avec un bras en position sortie.
La figure 3 représente une vue de détail de l'invention au niveau de l'arrière droit d'une charge utile portée par le bras lors d'une première phase de rentrée dans un compartiment du véhicule.
La figure 4 représente une vue de détail au niveau de l'arrière droit de la charge utile lors d'une seconde phase de rentrée dans le compartiment.
La figure 5 représente une vue de détail au niveau de l'arrière droit de la charge utile lorsque le bras est en position rentrée.

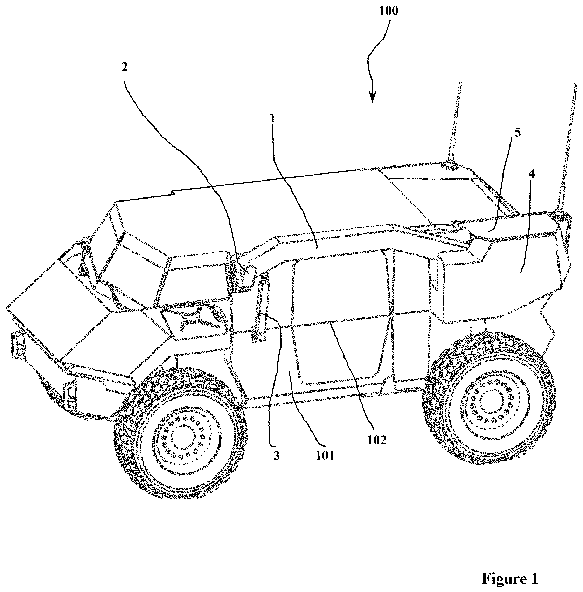

Selon la figure 1, un véhicule militaire 100 comporte un bras articulé 1 fixé sur une paroi latérale 101. L'articulation du bras relativement au véhicule se fait au niveau d'une première extrémité du bras 1 et au moyen d'une charnière 2 (ici constituée par une chape) comportant un axe sensiblement horizontal. Le bras 1 est aussi relié au véhicule 100 par un actionneur 3 du type vérin.

Dans la position dite rentrée du bras 1 qui est visible sur cette figure, une seconde extrémité du bras 1 est positionnée dans un compartiment 4 solidaire du véhicule 100, compartiment qui est fermé sur le dessus par un capot 5.

On notera que le bras 1 comporte une forme d'arche qui passe au-dessus d'une porte latérale 102 du véhicule 100 pour permettre la libre ouverture de la porte 102 lorsque le bras 1 est dans la position rentrée.

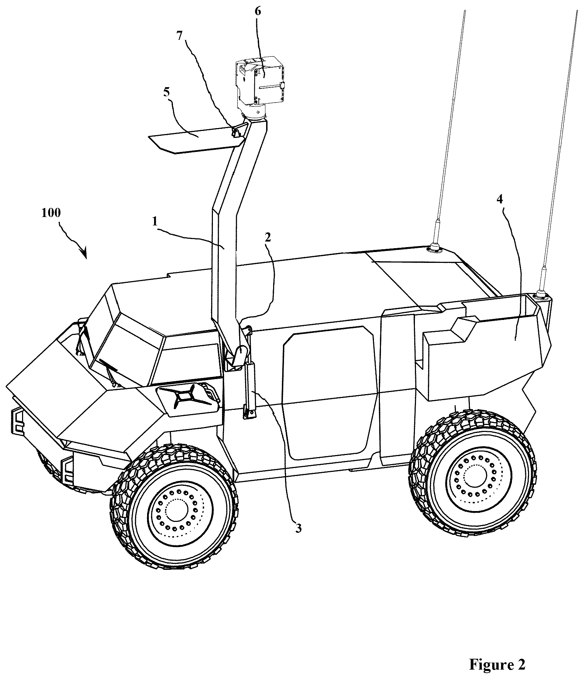

Selon la figure 2, le bras 1 est déployé par rotation autour de l'axe de la charnière 2 sous l'action du vérin 3. Le bras 1 se positionne alors sensiblement à la verticale dans une position dite sortie, où la seconde extrémité du bras 1 est extraite du compartiment 4.

La seconde extrémité du bras 2 porte une charge utile 6, en l'occurrence un moyen d'observation 6 tel qu'une caméra 6.

On peut voir sur cette figure 2 que le capot 5 est solidaire de la seconde extrémité du bras 1 au niveau d'une liaison pivot 7 qui est située sous la charge utile 6.

Le capot 5 selon le mode de réalisation représenté, est orienté sensiblement à l'horizontale et maintenu dans cette position par l'action d'un moyen élastique plaçant le capot 5 contre un limiteur de course (moyen élastique et limiteur de course non visibles).

Dans cette configuration sortie et pleinement déployée, la charge utile 6 bénéficie d'un point de vue élevé et ouvert sur 360 degrés propice aux actions d'observation ou de visée déportée. On remarque que le compartiment 4 est totalement ouvert sur le dessus.

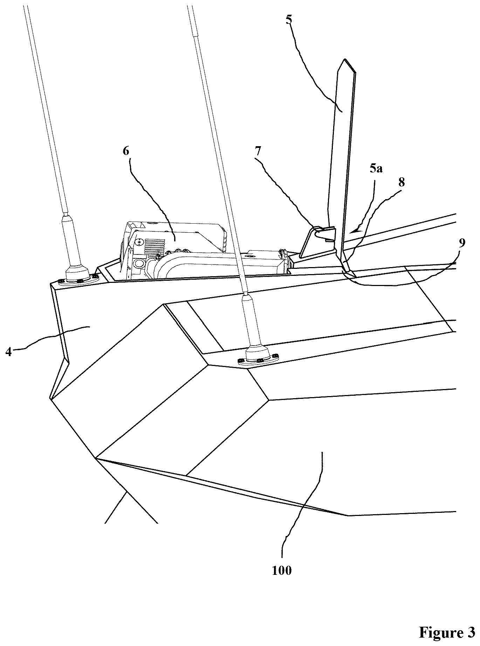

Selon la figure 3, on peut voir que le capot 5 porte au niveau d'une partie arrière 5a un levier 8 qui est donc situé au voisinage de la liaison pivot 7. Lorsque le bras 1 se replie de la position sortie vers la position fermée, le levier 8 interfère avec une partie 9 du compartiment 4.

Selon un autre mode de réalisation non représenté, l'interférence pourrait également avoir lieu directement avec une partie 9 du véhicule 100 positionnée au niveau de l'une de ses parois orientée vers le haut.

Dans cette première phase de mouvement de repli, on note que la charge utile 6 est placée dans le compartiment 4 pour sa majeure partie et qu'il ne reste plus qu'un faible débattement inférieur à 10 degrés avant que le bras 1 arrive au terme de son mouvement de repli.

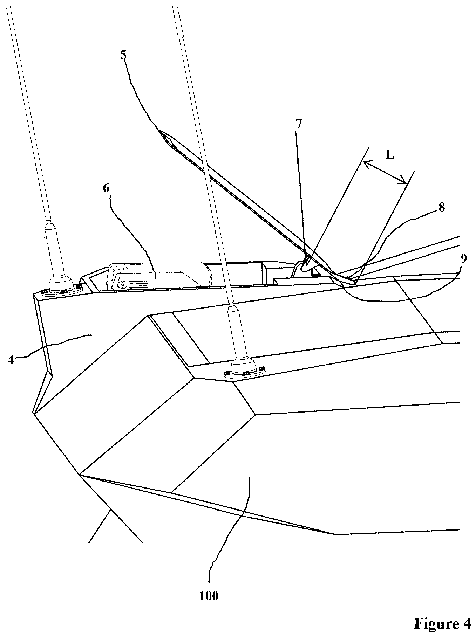

Selon figure 4, le bras 1 continue son mouvement de repli au-delà de l'inclinaison représentée à la figure 3.

Ce mouvement entraine l'appui du levier 8 sur la partie 9 du compartiment. Ce point d'appui (ou point d'interférence) est situé entre l'axe de charnière du bras (charnière visible à la figure 2) et la liaison pivot 7. Il en résulte un pivotement progressif du capot 5 dans le sens de la fermeture du compartiment 4. Le levier 8 à un profil à l'extrémité arrondie et la partie 9 du compartiment forme un pan incliné. De telles dispositions facilitent le pivotement.

Au fur et à mesure du pivotement du bras 1, le levier glissera le long de la partie 9 du compartiment comme on le voit à la figure 4.

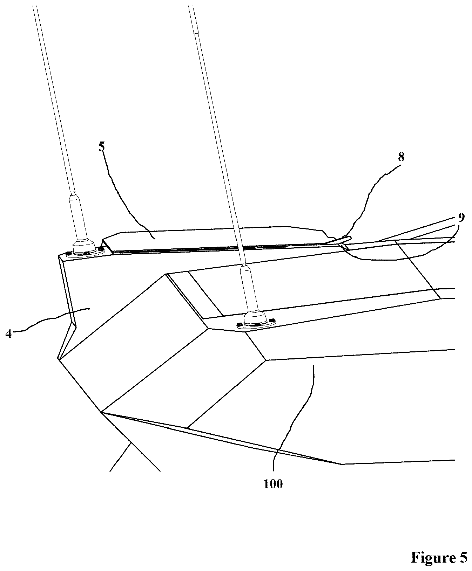

Selon la figure 5, le mouvement de repli du bras 1 est achevé, la charge utile est totalement rentrée, et le levier 8 par son interférence avec la partie 9 du compartiment 4 applique un couple de fermeture sur le capot 5 qui est maintenu plaqué sur l'ouverture du compartiment 4 protégeant ainsi la charge utile 6 de l'environnement extérieur.

Lorsque l'on déploie le bras 1 en lui faisant subir un mouvement de sortie, les effets inverses à ceux précédemment décris se déroulent, ce qui permet d'avoir une ouverture rapide du capot 5 sur moins de 10 degrés de relèvement du bras 1 et avec la simple force d'un unique actionneur qu'est le vérin 3 visible à la figure 1.

Afin d'obtenir le mouvement d'ouverture ou de fermeture du capot 5 le plus rapide possible, l'Homme du Métier choisira une longueur L de levier 8 (longueur L visible à la figure 4) entre le point d'interférence du levier 8 avec le compartiment et la liaison pivot 7 la plus courte possible. Ceci nuira par contre à la progressivité de l'ouverture et de la fermeture.

## Revendications

1. Véhicule militaire (100) comportant un bras (1) articulé relativement au véhicule (100) au moyen d'une charnière (2) située à une première extrémité du bras (1), bras (1) comportant une charge utile (6) à sa seconde extrémité, charge contenue dans un compartiment (4) solidaire du véhicule (100) lorsque le bras (2) est dans une première position dite position rentrée, bras déployable (1) vers une seconde position dite position sortie dans laquelle la charge (6) est sortie du compartiment (4), véhicule (100) **caractérisé en ce que** le bras (1) comporte un capot (5) monté pivotant par rapport au bras (1) à l'aide d'une liaison pivot (7) entre une position ouverte, obtenue par l'action d'un moyen élastique lorsque le bras (1) est en position sortie, capot (5) fermant le compartiment (4) lorsque le bras (1) est en position rentrée, le pivotement de fermeture du capot (5) étant obtenu contre l'action du moyen élastique par interférence d'un levier (8) solidaire du capot (5) avec une partie du véhicule (100) ou du compartiment (4).

2. Véhicule (100) selon la revendication 1, **caractérisé en ce que** le levier (8) est positionné de façon à interférer avec la partie (9) de véhicule (100) ou de compartiment (4) en un point situé entre la charnière (2) du bras et la liaison pivot (7).

3. Véhicule (100) selon une des revendications précédentes, **caractérisé en ce que** la charge utile (6) comporte un moyen d'observation (6).

4. Véhicule (100) selon l'une des revendications 1 à 3, **caractérisé en ce que** le capot (5) obture totalement le compartiment (4) lorsque le bras (1) est en position rentrée.

5. Véhicule (100) selon l'une des revendications 1 à 4 **caractérisé en ce que** le levier (8) comporte un profil arrondi permettant un pivotement progressif du capot (5).

## Patentansprüche

1. Militärfahrzeug (100), aufweisend einen Arm (1), der mittels eines Scharniers (2), das sich an einem ersten Ende des Arms (1) befindet, relativ am Fahrzeug (100) angelenkt ist, wobei der Arm (1) eine Nutzlast (6) an seinem zweiten Ende aufweist, wobei die Last in einem mit dem Fahrzeug (100) fest verbundenen Fach (4) enthalten ist, wenn der Arm (2) in seiner ersten eingefahrenen Position ist, wobei der Arm (1) in eine zweite ausgefahrene Position ausklappbar ist, in welcher die Last (6) dem Fach (4) entnommen ist, wobei das Fahrzeug (100) **dadurch gekennzeichnet ist, dass** der Arm (1) eine Abdeckung (5) aufweist, die in Bezug auf den Arm (1) mit Hilfe einer Drehverbindung (7) zwischen einer geöffneten Position schwenkend angebracht ist, die durch die Aktion eines elastischen Mittels erhalten wird, wenn der Arm (1) in ausgefahrener Position ist, wobei die Abdeckung (5) das Fach (4) verschließt, wenn der Arm (1) in eingefahrener Position ist, wobei das verschließende Schwenken der Abdeckung (5) gegen die Aktion des elastischen Mittels durch Interferenz eines mit der Abdeckung (5) fest verbundenen Hebels (8) mit einem Teil des Fahrzeugs (100) oder des Fachs (4) erhalten wird.

2. Fahrzeug (100) nach Anspruch 1, **dadurch gekennzeichnet, dass** der Hebel (8) derart positioniert ist, dass er mit dem Teil (9) des Fahrzeugs (100) oder Fachs (4) an einer Stelle interferiert, die sich zwischen dem Scharnier (2) des Arms und der Drehverbindung (7) befindet.

3. Fahrzeug (100) nach einem der vorangehenden Ansprüche, **dadurch gekennzeichnet, dass** die Nutzlast (6) ein Beobachtungsmittel (6) aufweist.

4. Fahrzeug (100) nach einem der Ansprüche 1 bis 3, **dadurch gekennzeichnet, dass** die Abdeckung (5) das Fach (4) vollständig bedeckt, wenn er Arm (1) in eingefahrener Position ist.

5. Fahrzeug (100) nach einem der Ansprüche 1 bis 4 **dadurch gekennzeichnet, dass** der Hebel (8) ein abgerundetes Profil aufweist, das ein allmähliches Schwenken der Abdeckung (5) erlaubt.

## Claims

1. A military vehicle (100) including an arm (1) articulated relative to the vehicle (100) using a hinge (2) located at a first end of the arm (1), the arm (1) including a payload (6) at its second end, the load being contained in a compartment (4) secured to the vehicle (100) when the arm (2) is in a first position called withdrawn position, the arm being deployable (1) toward a second position, called deployed position, in which the load (6) is removed from the compartment (4), the vehicle (100) being **characterised in that** the arm (1) includes a cover (5) mounted pivoting relative to the arm (1), using a pivot link (7), between an open position, obtained by the action of a resilient means when the arm (1) is in the deployed position, the cover (5) closing the compartment (4) when the arm (1) is in the withdrawn position, the closing pivoting of the cover (5) being obtained against the action of the resilient means by interference of a lever (8) secured to the cover (5) with a part of the vehicle (100) or the compartment (4).

2. The vehicle (100) according to claim 1, **characterised in that** the lever (8) is positioned so as to interfere with the vehicle (100) or compartment (4) part (9) at a point located between the hinge (2) of the arm and the pivot link (7).

3. The vehicle (100) according to one of the preceding claims, **characterised in that** the payload (6) includes an observation means (6).

4. The vehicle (100) according to one of claims 1 to 3, **characterised in that** the cover (5) completely closes off the compartment (4) when the arm (1) is in the withdrawn position.

5. The vehicle (100) according to one of claims 1 to 4, **characterised in that** the lever (8) includes a rounded profile allowing a gradual pivoting of the cover (5).
